Europäisches Patentamt

European Patent Office

Office européen des brevets

(19)

(11) Numéro de publication : **0 146 442**
**B1**

(12)    FASCICULE DE BREVET EUROPÉEN

(45) Date de publication du fascicule du brevet :
09.09.87

(51) Int. Cl.⁴ : **C 03 B 35/16**

(21) Numéro de dépôt : 84402311.9

(22) Date de dépôt : 14.11.84

(54) **Dispositif de chargement d'un four continu horizontal pour feuilles de verre.**

(30) Priorité : 14.11.83 DE 3341207

(43) Date de publication de la demande :
26.06.85 Bulletin 85/26

(45) Mention de la délivrance du brevet :
09.09.87 Bulletin 87/37

(84) Etats contractants désignés :
BE DE FR GB IT SE

(56) Documents cités :
DE-C- 3 341 207
US-A- 2 038 662
US-A- 4 282 026

(73) Titulaire : **SAINT-GOBAIN VITRAGE**
**Les Miroirs 18, avenue d'Alsace**
**F-92400 Courbevoie (FR)**
**BE FR GB IT SE**
**VEGLA Vereinigte Glaswerke GmbH**
**Viktoriaallee 3-5**
**D-5100 Aachen (DE)**
**DE**

(72) Inventeur : **Diederen, Werner**
**Vogelsang 7**
**D-5120 Herzogenrath (DE)**
Inventeur : **Sonnleitner, Herbert**
**Birkengangstrasse 40 b**
**D-5190 Stolberg (DE)**

(74) Mandataire : **Leconte, Jean-Gérard et al**
**Saint-Gobain Recherche 39, Quai Lucien Lefranc**
**F-93304 Aubervilliers Cedex (FR)**

## Description

L'invention concerne un dispositif de chargement d'un four continu horizontal pour l'échauffement de feuilles de verre jusqu'à la température de trempe ou de bombage, se composant d'un transporteur à rouleaux, mis en série avec le système de transport du four continu, avec au moins une station de chargement dans laquelle les feuilles de verre sont positionnées et chargées sur des barres-supports, disposées entre le rouleau de transport et pouvant, à un moment donné, s'abaisser simultanément sous le lit support formé par les rouleaux de transport, pour permettre le transfert des feuilles de verre sur le transporteur à rouleaux.

Selon un tel dispositif de chargement connu (US-A-4 282 026), les barres pouvant s'abaisser sont disposées sur un cadre commun. Après la pose, manuelle ou mécanique, de la ou des feuilles de verre sur les barres-supports, le cadre est abaissé avec les barres à l'aide d'un dispositif élévateur et la ou les feuilles de verre passent sur les rouleaux de chargement avec lesquels elle ou elles sont transportées jusqu'au four. Dès que la zone du transporteur se situant au dessus des barres est libre, le cadre avec les barres est soulevé par le dispositif élévateur et la ou les feuilles de verre suivantes peuvent être chargées et positionnées.

De même qu'un positionnement exact des feuilles de verre sur les barres, un abaissement des barres à un moment précis est important pour les fours continus automatisés actuels, afin d'assurer d'une part une température finale donnée de la feuille de verre, dans les limites de tolérances, et d'autre part pour que la feuille de verre occupe bien une position prédéterminée dans la station de traitement faisant suite au four, par exemple dans la station de bombage. La cadence de défilement des feuilles de verre peut être très grande dans les fours continus à fort débit, de sorte que le chargement et l'alignement des feuilles de verre sur les barres-supports doivent être effectués en un temps trop bref pour un alignement soigné des feuilles de verre.

L'invention a pour but de développer un dispositif de chargement où, sans pour autant diminuer la cadence de défilement dans le four, on prolonge le temps de pose et d'alignement des feuilles de verre.

Selon l'invention ce but est obtenu par le fait qu'au moins une des barres de la station de chargement est montée indépendamment des autres et munie de son propre dispositif élévateur, et est soulevée avant les autres barres dès que la zone du transporteur se trouvant au-dessus d'elle est libérée de la feuille de verre qui passe sur les rouleaux de transport.

Alors que selon l'art, les barres ne peuvent recevoir une nouvelle feuille de verre que lorsque la feuille de verre, transférée sur le transporteur à rouleaux, a quitté également la zone du transporteur située au-dessus de la dernière barre, selon l'invention, une ou plusieurs des barres arrières, vues dans la direction du transport, sont soulevées avant les dernières barres. Ainsi, au moins une partie de la surface de chargement formée par les barres est disponible avec un temps d'avance pour le chargement de la feuille de verre suivante.

Suivant la plus simple forme de réalisation, une station de chargement comprend deux barres soulevées et abaissées indépendamment l'une de l'autre. Cette configuration présente l'avantage que la feuille de verre suivante peut être déjà supportée, au moins partiellement par la première barre soulevée. Si de plus, cette première barre est soulevée d'une hauteur suffisante, une feuille de verre, qui aurait été chargée sur une deuxième station de chargement, peut s'engager, en cas de besoin, entre le lit de transport et la barre alors même que la première station de chargement n'est pas totalement libre.

Dans une forme de réalisation préférée de l'invention, chaque barre est montée indépendamment de sa voisine et munie de son propre dispositif élévateur. De plus, celui-ci est commandé par un détecteur propre, adjoint à chaque barre et situé à l'arrière de chacune d'elle, vu dans la direction de transport.

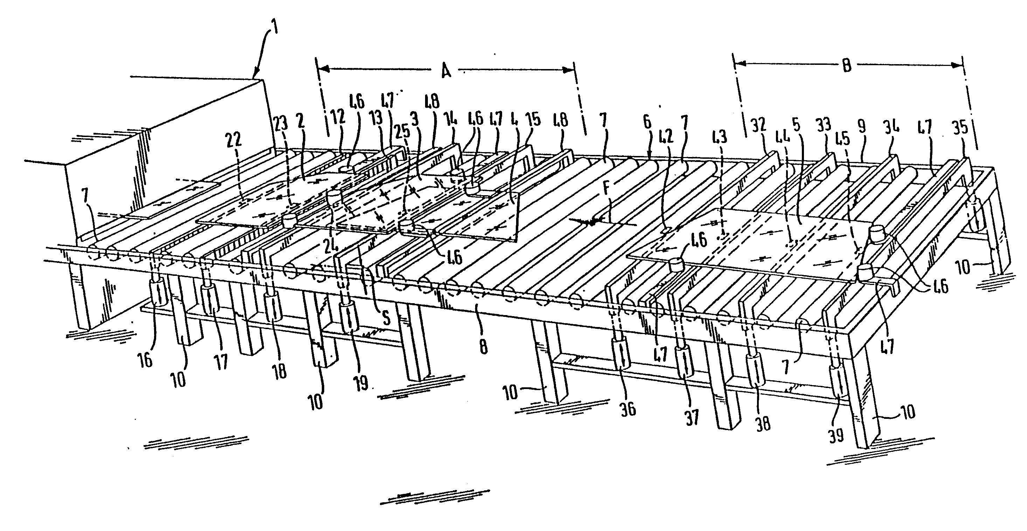

D'autres caractéristiques et avantages de l'invention apparaîtront dans la description suivante d'un exemple de réalisation, faite avec référence au dessin annexé.

La planche unique représente un dispositif de chargement selon l'invention présentant deux stations de chargement situées l'une derrière l'autre.

Le dispositif de chargement d'un four continu 1 pour échauffer des feuilles de verre 2, 3, 4, 5 jusqu'à leur température de trempe ou de bombage, comprend un transporteur à rouleaux 6, formé d'une série de rouleaux de transport 7 cylindriques commandés qui sont posés sur les longerons longitudinaux 8, 9. Les rouleaux de transport 7 appartenant au dispositif de chargement ont la même vitesse de rotation que ceux du dispositif de transport du four continu. Les longerons sont sur des supports 10.

Sur le transporteur à rouleaux 6, placées l'une derrière l'autre, se trouvent deux stations de chargement A, B à l'intérieur desquelles sont posées les feuilles de verre, à la main ou à l'aide d'un dispositif approprié.

Dans la station de chargement A, disposées entre des rouleaux de transport 7, se trouvent en tout quatre barres 12, 13, 14 et 15 pouvant être abaissées ou soulevées indépendamment les unes des autres. Pour ces mouvements verticaux servent les dispositifs élévateurs 16, 17, 18 et 19, du type vérins pneumatiques, qui supportent chacun une barre posée par ses deux extrémités. Sur la figure, on a représenté les deux barres avant 12, 13 abaissées, avec leur surface supérieure située sous le lit formé par les rouleaux de transport 7. Les barres arrières 14, 15 sont représentées soulevées d'une hauteur permettant le passage des feuilles de verres 4, 5 au travers de l'écartement 5 situé entre le lit de transport formé par la génératrice supérieure des rouleaux 7 et les barres soulevées.

Suivant la direction de transport (flèche F), sous le lit de transport, à l'arrière de chaque barre 12, 13, 14 et 15 se trouve respectivement un dispositif détecteur formé d'une cellule photoélectrique 22, 23, 24 et 25. Ces cellules photoélectriques commandent les vérins 16 à 19, appartenant respectivement aux barres 12 à 15 de sorte que, dès que l'arête arrière d'une feuille de verre défilant sur le transporteur 6 passe la cellule photoélectrique, celle-ci envoie un signal qui commande le soulèvement de la barre correspondante.

La station de chargement B est construite de la même façon. Elle comprend elle aussi quatre barres 32, 33, 34 et 35, en forme de portiques, posées à leurs extrémités sur des vérins 36, 37, 38 et 39 qui les abaissent et soulèvent. Associé à chaque barre, on a un dispositif détecteur, formé d'une cellule photoélectrique 42, 43, 44 et 45 disposée à l'arrière de la barre, vue dans la direction de transport.

Dans les stations de chargement A et B, quelques éléments d'ajustage 46 sont disposés de plus sur les bras de supports 47, liés eux-mêmes, directement ou par des longerons en forme de portiques 48, au cadre du transporteur à rouleaux. Les éléments d'ajustage 46 ont une position réglable suivant la forme et la taille des feuilles de verre. En général, trois éléments d'ajustage 46 sont suffisants pour fixer exactement la position souhaitée de la feuille de verre.

Nous allons maintenant décrire les différentes étapes de fonctionnement du dispositif de chargement à l'aide des positions des barres et des feuilles de verre représentées sur le dessin.

Tous les rouleaux 7 du transporteur sont en rotation continue, ils prennent en charge les feuilles de verre dès que les barres s'abaissent. Alors que les barres 12 et 13 sont abaissées, la feuille de verre 2 se trouve sur les rouleaux de transport 7, à peu près dans la zone du transporteur se situant au-dessus de ces barres abaissées 12, 13. Auparavant, la feuille de verre avait été posée sur les barres 14, 15, positionnée grâce aux trois éléments d'ajustage 46 et transférée sur les rouleaux de chargement par l'abaissement commun des quatre barres 12, 13, 14 et 15. Après que l'arête arrière de la feuille de verre 2 ait passé la cellule photoélectrique 25, le dispositif élévateur 19, alors mis en route, a soulevé la barre 15. De même, la barre 14 à été soulevée à l'instant où l'arête arrière de la feuille de verre 2 passait la cellule photoélectrique 24. Une fois les deux barres 14 et 15 soulevées, une feuille de verre 3 a été aussitôt chargée dessus et positionnée grâce aux trois éléments d'ajustage correspondants.

Pendant ce chargement de la feuille de verre 3, la feuille de verre 4 circule sous les barres soulevées 14, 15. Cette feuille de verre 4, de même que la feuille de verre 5, aura été auparavant chargée sur les barres 32, 33, 34 35 dans la station de chargement B. La feuille de verre suivante 5 est chargée sur les rouleaux de transport 7 par abaissement simultané des barres 32 à 35.

Quand la feuille de verre 4 se rapproche de la barre 13, la feuille de verre 2 a passé la cellule photoélectrique 23, de sorte que la barre 13 a déjà été soulevée. Finalement, la barre 12 est elle-aussi soulevée. Ainsi les barres 12, 13 sont alors toutes deux soulevées de sorte que la feuille de verre suivante peut être chargée sur ces deux barres 12, 13 tandis que, simultanément, la feuille de verre 4 défile sous ces barres soulevées 12, 13.

Les commandes de l'abaissement simultané des quatres barres d'une station de chargement peuvent être données, d'une manière connue par une unité centrale de commande du four continu.

## Revendications

1. Dispositif de chargement d'un four continu horizontal pour l'échauffement de feuilles de verre jusqu'à leur température de trempe ou de bombage, se composant d'un transporteur à rouleaux, aligné sur le système de transport du four continu, avec au moins une station de chargement dans laquelle les feuilles de verre sont chargées et positionnées sur des barres en position haute, disposées entre les rouleaux de transport et pouvant à un moment donné s'abaisser simultanément, sous le plan des rouleaux de transport, pour le transfert de la feuille de verre sur le transporteur à rouleaux, caractérisé en ce que au moins une des barres (12, 13, 14, 15-32, 33, 34, 35) de la station de chargement (A, B), montée indépendamment des autres barres, est munie de son propre dispositif élévateur (16, 17, 18, 19-36, 37, 38, 39) et est soulevée, avant les autres barres, dès qu'elle est libérée de la feuille de verre prise en charge par les rouleaux de transport (7).

2. Dispositif de chargement suivant la revendication 1, caractérisé en ce que toutes les barres (12, 13, 14, 15-32, 33, 34, 35) d'une station de chargement (A, B) sont montées respectivement indépendantes les unes des autres et munies d'un dispositif élévateur propre (16, 17, 18, 19-36, 37, 38, 39).

3. Dispositif de chargement suivant la revendication 1 ou 2, caractérisé en ce que chaque barre (12, 13, 14, 15-32, 33, 34, 35) pouvant être soulevée indépendamment des autres barres est munie d'un dispositif détecteur, placé derrière la barre, vu suivant la direction du transport, et commandant le dispositif élévateur (16, 17, 18, 19-36, 37, 38, 39) propre de ladite barre.

4. Dispositif de chargement suivant la revendication 3, caractérisé en ce que les dispositifs détecteurs sont des cellules photoélectriques (22, 25-42, 45).

5. Dispositif de chargement suivant l'une des revendications 1 à 4, caractérisé en ce que, à l'intérieur de la station de déchargement (A, B), des éléments d'ajustage (46) sont prévus pour le positionnement des feuilles de verre.

6. Dispositif de chargement suivant l'une des revendications 1 à 5, caractérisé en ce que les mouvements des dispositifs élévateurs (16, 17, 18, 19-36, 37, 38, 39) sont commandés par une commande centrale du four.

7. Dispositif de chargement suivant l'une des revendications 1 à 6, caractérisé en ce que deux ou plusieurs stations de chargement (A, B) sont disposées l'une derrière l'autre, vu dans la direction d'avancement des feuilles de verre.

8. Dispositif de chargement suivant la revendication 7, caractérisé en ce que les barres (12, 13, 14, 15-32, 33, 34, 35) ont une forme de portique et que soulevées, elles permettent sous elles, le transport d'une feuille de verre.

### Claims

1. Apparatus for loading a continuous horizontal furnace for heating glass sheets to their tempering or curving temperature, comprising a roller transporter, aligned with the transport system for the continuous furnace, with at least one loading station in which the glass sheets are loaded and positioned on bars in a raised position, arranged between the transport rollers and being capable of being lowered simultaneously at a given moment to below the plane of the transport rollers, for transfer of the glass sheet on to the roller transporter, characterised in that at least one of the bars (12, 13, 14, 15-32, 33, 34, 35) of the loading station (A, B), mounted independently of the other bars, is provided with its own elevator device (16, 17, 18, 19-36, 37, 38, 39) and is raised, before the other bars, as soon as it is freed from the glass sheet taken by the transport rollers (7).

2. Loading apparatus according to claim 1, characterised in that all the bars (12, 13, 14, 15-32, 33, 34, 35) of a loading station (A, B) are respectively mounted independently of each other and provided with their own respective elevator device (16, 17, 18, 19-36, 37, 38, 39).

3. Loading apparatus according to claim 1 or 2, characterised in that each bar (12, 13, 14, 15-32, 33, 34, 35) which may be lifted independently of the other bars is provided with a detector device, placed behind the bar, as seen in the direction of transport, controlling the elevator device (16, 17, 18, 19-36, 37, 38, 39) of said bar.

4. Loading apparatus according to claim 3, characterised in that the detector devices are photoelectric cells (22, 25-42, 45).

5. Loading apparatus according to any one of claims 1 to 4, characterised in that in the loading station (A, B) adjusting elements (46) are provided for positioning of the glass sheets.

6. Loading apparatus according to any one of claims 1 to 5, characterised in that the movements of the elevator devices (16, 17, 18, 19-36, 37, 38, 39) are controlled by a central control unit for the furnace.

7. Loading apparatus according to one of claims 1 to 6, characterised in that two or more loading stations (A, B) are arranged one behind the other, seen in the direction of advance of the glass sheets.

8. Loading apparatus according to claim 7, characterised in that the bars (12, 13, 14, 15-32, 33, 34, 35) are shaped to form a gantry and when raised they allow transport of a glass sheet below them.

### Patentansprüche

1. Beschickungsvorrichtung für einen Horizontal-Durchlaufofen zum Erwärmen von Glasscheiben auf Vorspann- oder Biegetemperatur, bestehend aus einem dem Transportsystem des Durchlaufofens vorgeschalteten Rollenförderer, mit wenigstens einer Auflegestation, in der die Glasscheiben auf in angehobener Stellung befindliche Tragleisten aufgelegt und positioniert werden, wobei die Tragleisten zwischen den Transportrollen angeordnet sind und zu einem gegebenen Zeitpunkt gleichzeitig unter die Ebene der Transportrollen abgesenkt werden können, um die Glasscheibe auf den Rollenförderer zu übergeben, dadurch gekennzeichnet, daß wenigstens eine der Tragleisten (12, 13, 14, 15-32, 33, 34, 35) der Auflegestation (A, B) unabhängig von den anderen Tragleisten gelagert und mit einer eigenen Hubvorrichtung (16, 17, 18, 19-36, 37, 38, 39) versehen ist und zeitlich vor den anderen Tragleisten wieder angehoben wird, sobald sie von der von den Transportrollen (7) übernommenen Glasscheibe freigegen ist.

2. Beschickungsvorrichtung nach Anspruch 1, dadurch gekennzeichnet, daß alle Tragleisten (12, 13, 14, 15-32, 33, 34, 35) einer Auflegestation (A, B) einzeln und unabhängig voneinander gelagert und jeweils mit einer eigenen Hubvorrichtung (16, 17, 18, 19-36, 37, 38, 39) versehen sind.

3. Beschickungsvorrichtung nach Anspruch 1 oder 2, dadurch gekennzeichnet, daß jeder unabhängig von den anderen Tragleisten anhebbaren Tragleiste (12, 13, 14, 15-32, 33, 34, 35) eine in Transportrichtung gesehen hinter der Tragleiste angeordnete, die Hubvorrichtung für die jeweilige Tragleiste steuernde Detektoreinrichtung zugeordnet ist.

4. Beschickungsvorrichtung nach Anspruch 3, dadurch gekennzeichnet, daß die Detektoreinrichtungen photoelektrisch Zellen (22 bis 25-42 bis 45) sind.

5. Beschickungsvorrichtung nach einem der Ansprüche 1 bis 4, dadurch gekennzeichnet, daß innerhalb der Auflegestation (A, B) Justierelemente (46) zur Positionierung der Glasscheiben vorgesehen sind.

6. Beschickungsvorrichtung nach einem der Ansprüche 1 bis 5, dadurch gekennzeichnet, daß die Bewegungen der Hubvorrichtungen (16, 17, 18, 19-36, 37, 38, 39) von einer zentralen Ofensteuerung gesteuert werden.

7. Beschickungsvorrichtung nach einem der Ansprüche 1 bis 6, dadurch gekennzeichnet, daß in Transportrichtung der Glasscheiben gesehen zwei oder mehr Auflegestationen (A, B) hintereinander angeordnet sind.

8. Beschickungsvorrichtung nach Anspruch 7, dadurch gekennzeichnet, daß die Tragleisten (12, 13, 14, 15-32, 33, 34, 35) brückenartig ausgebildet sind und in angehobenem Zustand den Transport von Glasscheiben unter den angehobenen Tragleisten hindurch ermöglichen.